# EUROPEAN PATENT APPLICATION

(11) **EP 4 098 639 A1**
(43) Date of publication of application: **07.12.2022**
(21) Application number: 21177564.8
(22) Date of filing: 03.06.2021
(51) Int. Cl.: C04B 38/10, C04B 28/06, C04B 28/14, C04B 28/02, C04B 22/10, C04B 40/00, C04B 111/28

(54) **FOAMED MINERAL BINDER COMPOSITIONS**

(71) Applicant: Sika Technology AG, 6340 Baar (CH)
(72) Inventor: BUCHER, Reto, 6064 Kerns (CH); BARMET, Robin, 6060 Sarnen (CH); ACKERMANN, Herbert, 8632 Tann (CH); EBERHARDT, Bernd Arnd, 8400 Winterthur (CH); ROSKAMP, Robert, Altdorf 6460 (CH); ROTZETTER, Aline, 5430 Wettingen (CH)
(74) Representative: Sika Patent Attorneys

(57) **Abstract**

A method for producing a foamed mineral binder composition comprises the steps of:
a) Separately providing:
(i) an aqueous foam;
(ii) an aqueous slurry comprising a mineral binder and a dispersed polymer;

b) Mixing the slurry of the mineral binder with the aqueous foam to obtain the foamed mineral binder composition;
whereby during the production of the foamed mineral binder composition, carbon dioxide and/or a carbonate is provided such that it is incorporated in the foamed mineral binder composition.

## Description

### Technical field

The invention relates to a method for producing a foamed mineral binder composition. Additional aspects of the invention are related to a foamed mineral binder composition and the use of an aqueous foam for producing a foamed mineral binder composition.

### Background art

In construction industry, foamed mineral binder compositions, such as e.g. foamed cement or foamed concrete, have been known for a long time. Foamed mineral binder compositions typically provide a combination of reduced weight and thermal insulation with excellent fire resistance.

For example, foamed concrete is known as on-site cellular light weight concrete (LWIC). In contrast to aerated autoclaved concrete, foamed concrete is most easily produced by either mixing a blowing agent, e.g. H₂O₂ or aluminum powder, into the concrete slurry, or by producing an aqueous foam with suitable tensides, which is mixed into the slurry.

However, although quite low densities can be obtained, the compressive or bending strengths suffer considerably due to the brittleness of the foamed materials. Consequently, concrete foams are either used at moderate densities, i.e. representing a compromise between thermal conductivity and strength, or they must be used in combination with reinforcing elements, e.g. reinforcing frames. In the latter case, however, the thermal insulation properties are affected by the frame material acting as a thermal bridge.

Another issue frequently encounter with foamed mineral binder compositions is that foams are thermodynamically unstable systems, which in turn results in partial collapsing of the foam during the hardening process.

In this context WO 2019/038105 A1 (BASF) discloses a hybrid foam comprising inter alia a mineral binder and a polymer with reduced brittleness and enhanced strength properties.

EP 3 176 138 A1 (Lafarge) describes for example a process for the production of a mineral foam comprising the steps if (i) separately preparing a slurry of cement and an aqueous foam, wherein the cement slurry comprises water and Portland cement; (ii) contacting the slurry of cement with the aqueous foam to obtain a slurry of foamed cement; (iii) adding an aluminum salt source before, during or after step (ii); and (iv) casting the slurry of foamed cement and leave it to set. Thereby, the aluminum salt acts as an accelerator and stabilizes the mineral foam before the cement slurry set.

EP 3 483 131 A1 (Holcim Technology Ltd) discloses a method for preparing a mineral foam with improved stability consisting of the steps (i) preparing a cement slurry; (ii) adding to the cement slurry a gas-forming liquid; (iii) applying the mixture obtained at step (ii) on a support; and (iv) leaving the mixture to expand on the support. Thereby the gas-forming liquid comprises a gas-forming agent and a viscosity-modifying agent which is a polymer chosen among anionic bio-based polymer, amphiphilic bio-based polymer, alkali swellable acrylic polymer and mixture thereof.

WO 2008/130107 (Park) describes a method for producing a rapid set cement foam including: a step of foaming an aqueous foam solution obtained by dissolving a foaming agent in water; a step of forming a cement slurry by mixing a foam and cement; a step of adding an accelerating agent to the cement slurry; and a step of forming a rapid set cement foam by casting the cement slurry mixed with additives into a mold or over walls of a building.

However, there is still a need to provide improved solutions, which overcome the above mentioned drawbacks of foamed mineral binder compositions or have them to a lesser extent.

### Disclosure of the invention

It is an object of the present invention to provide improved solutions for producing foamed mineral binder compositions. Thereby, preferably, the solutions should allow for producing uniform foam structures with reduced tendency of collapsing during the hardening process. Especially, the obtainable foamed mineral binder compositions should have low densities below 500 g/liter, in particular below 200 g/liter. Preferably, the obtainable foamed mineral binder compositions simultaneously should have good mechanical properties, especially good compressive strength properties.

Surprisingly, it has been found that the features of claim 1 can achieve this object. Thus, the core of the present invention is related to a method for producing a foamed mineral binder composition, comprising the steps of:
a) Separately providing:
   (i) an aqueous foam;
   (ii) an aqueous slurry comprising a mineral binder and a dispersed polymer;
b) Mixing the slurry of the mineral binder with the aqueous foam to obtain the foamed mineral binder composition;
whereby during the production of the foamed mineral binder composition, carbon dioxide and/or a carbonate is provided such that it is incorporated in the foamed mineral binder composition.

As it turned out, the inventive method allows for producing foamed mineral binder compositions with adjustable densities well below 200 g/liter combined with highly beneficial mechanical properties, in particular compressive strength properties. Due to the low densities, the foamed mineral binder compositions feature very low thermal conductivity or very good thermal insulation properties, respectively. In fact, inventive foamed mineral binder compositions can be produced with thermal conductivities < 50 mW/m·K and compressive strengths > 0.2 MPa. Good thermal insulation properties make the inventive foamed mineral binder compositions suitable as fire resisting materials.

Furthermore, the inventive method does not require any chemically acting pore-forming agents to be used. This results in a highly reproducible production that is rather insensitive to environmental conditions during production and the specific chemical composition of the foamed mineral binder composition.

Without being bound by theory, it is believed that the carbon dioxide and/or the carbonate thickens the mixture of the slurry of the mineral binder and the aqueous foam produced in step b) and thereby stabilizes the foamed mineral binder composition during the hardening process. This results in a homogenous distribution of highly stable gas bubbles in the foamed mineral binder composition.

Furthermore, when compared with accelerating substances, such as e.g. CaCl₂, carbon dioxide as well as typically used carbonates only marginally affect the setting and hardening times of the foamed mineral binder compositions. This is in particular true if the aqueous slurry is mixed with high shear forces.

The inventive foamed mineral binder compositions can be used for many different applications. For example as phonic and thermal insulation, for fire protection, as a cavity-filling compound and/or for non-load bearing structures such as for example aesthetic bricks and panels for walls and/or ceilings.

Thereby, the foamed mineral binder composition can be applied vertically as well as horizontally, e.g. on walls, ceilings, floors, roofs, and/or facades.

Production of the foamed mineral binder composition can be effected directly on a building site, or the inventive foamed mineral binder composition can be used for the production of prefabricated elements, which are installed on the building site later on.

Additional aspects of the invention are subject of further independent claims. Particularly preferred embodiments are outlined throughout the description and the dependent claims.

### Ways of carrying out the invention

A first aspect of the present invention is directed to a method for producing a foamed mineral binder composition, comprising the steps of:
a) Separately providing:
   (i) an aqueous foam;
   (ii) an aqueous slurry comprising a mineral binder and a dispersed polymer;
b) Mixing the slurry of the mineral binder with the aqueous foam to obtain the foamed mineral binder composition;
whereby during the production of the foamed mineral binder composition, carbon dioxide and/or a carbonate is provided such that it is incorporated in the foamed mineral binder composition.

Especially, the aqueous slurry comprises more than one dispersed polymer, especially at least two, three or more dispersed polymers.

In the present context, the aqueous foam comprises or consists of gaseous bubbles enclosed by liquid walls. Thereby, the gaseous bubbles in particular consist of air, nitrogen and/or a noble gas. Air is especially preferred.

In particular, the aqueous foam is produced by mechanical foaming in the presence of a gas, especially air, nitrogen and/or a noble gas. Mechanical foaming is meant to be a method in which the gaseous bubbles of the foam are introduced into the water of the aqueous foam by mixing the gas present with water of the aqueous foam without performing any gas producing chemical reactions.

In particular the foaming is effected in absence of a chemically acting pore-forming agent and/or a chemically acting foaming agent. In absence of a chemically acting pore-forming agent and/or a chemically acting foaming agent in particular means that a proportion the chemically acting pore-forming agent and/or the chemically acting foaming agent is lower than 0.1 wt.%, in particular lower than 0.01 wt.%, especially lower than 0.001 wt.%, with respect to the water of the aqueous foam. Most preferably, there is no chemically acting pore-forming agent and/or chemically acting foaming agent present.

In particular, the carbon dioxide and/or the carbonate can be provided in the form of a substance selected from carbon dioxide, a source of carbon dioxide, carbonate and/or a source of carbonate. A source of carbon dioxide or source of carbonate is meant to be a substance, which upon contact with the foamed mineral binder composition and/or with one of its components reacts to give carbon dioxide and/or carbonate.

Especially, the substance is carbon dioxide and/or a water soluble carbonate salt, especially a hydrogen carbonate, in particular sodium hydrogen carbonate and/or potassium carbonate.

The carbon dioxide and/or a carbonate can in principle be provided at any time before, during and/or after steps a) and/or b).

For example the carbon dioxide and/or a carbonate can be provided during and/or after step b), e.g. during mixing and/or during conveying the foamed mineral binder composition. Especially, the carbon dioxide and/or a carbonate can be added to the foamed mineral binder composition after step b), e.g. in a conveying line and/or at a nozzle used for distributing the foamed mineral binder composition.

In another implementation, the carbon dioxide and/or a carbonate are provided before and/or during step a), in particular during step a).

According to a highly preferred embodiment, in step a) (i) an aqueous foam comprising dissolved carbon dioxide and/or carbonate is provided. This turned out to be a highly beneficial possibility for providing the carbon dioxide and/or the carbonate. Especially, the carbon dioxide and/or the carbonate is at least partly, especially completely, dissolved in the water comprised in the aqueous foam. Thereby, preferably, carbon dioxide and carbonate ions both are present in a chemical equilibrium.

Especially, the aqueous foam is produced by dissolving a substance selected from carbon dioxide, a source of carbon dioxide, carbonate and/or a source of carbonate in water to obtain an aqueous mixture, and subsequently foaming the so obtained aqueous mixture with a gas. The gas preferably is selected from air, nitrogen and/or noble gases. Especially preferred is air.

In another preferred embodiment, the aqueous foam is produced by foaming water with a gaseous mixture of carbon dioxide and a gas. The gas preferably is selected from air, nitrogen and/or noble gases. Especially preferred is air.

According to a first highly preferred embodiment, the substance comprises or consists of a water soluble carbonate salt, especially a hydrogen carbonate, in particular sodium hydrogen carbonate and/or potassium carbonate. Such substances only marginally affect the setting and hardening times of the foamed mineral binder compositions and allow for using the carbonate as a solid, e.g. in powdery form, which makes dosing very easy. However, other carbonates can be used as well.

Especially preferred, a weight proportion of carbonate ions (CO₃²⁻) comprised in the water soluble carbonate salt is from 0.01 - 3 wt.%, especially 0.1 - 1 wt.%, with respect to the mineral binder.

These concentrations turned out to be highly beneficial for stabilizing the foam structure. At lower or higher concentrations, the foams tend to collapse.

Especially preferred, the substance is sodium hydrogen carbonate and/or potassium carbonate, and the proportion of the substance is 0.01 - 3 wt.%, especially 0.1 - 1 wt.%, with respect to the mineral binder.

According to another highly preferred embodiment, the substance comprises or consists of carbon dioxide. Carbon dioxide can for example be introduced into the water of the aqueous foam by injecting gaseous carbon dioxide with an overpressure. In this case, the concentration of the carbon dioxide in the water can directly be controlled by the overpressure of the gaseous carbon dioxide, which is very convenient.

Especially, the aqueous foam is provided by foaming carbonated water with a gas selected from air, nitrogen and/or noble gases. Especially preferred is air. Carbonated water is meant to be water comprising dissolved carbon dioxide, preferably with a concentration of 150 - 7'000 mg, especially 500 - 3'500 mg, in particular 1'000 - 2'500 mg, per liter of water. Especially, the carbonated water is a saturated solution of carbon dioxide in water.

Likewise, in particular, the aqueous foam comprises the carbon dioxide with a concentration of 150 - 7'000 mg, especially 500 - 3'500 mg, in particular 1'000 - 2'500 mg, per liter of liquid water in the aqueous foam.

In particular, the liquid water of the aqueous foam comprises the carbon dioxide with a concentration of 50 - 100%, especially 75 - 95%, of the solubility of the carbon dioxide at the given temperature of the water.

These carbon dioxide concentrations turned out to be highly beneficial for stabilizing the foam structure. At lower or higher concentrations, the foams tend to collapse.

Especially, the aqueous foam has a pH of 6 -12, in particular 7-10.

Preferably, the aqueous foam comprises a surfactant. Surfactants help to stabilize the foam structure of the aqueous foam.

Surfactants are well known to the specialist and are summarized, for example, in "Surfactants and Polymers in aqueous solutions" (Wiley-VCH, K. Holmberg et al, 2nd Edition, 2007). Surfactants may be non-ionic surfactants, cationic surfactants, anionic surfactants and/or zwitterionic surfactants.

It may be particularly advantageous to use non-ionic surfactants, since they have a low tendency to be absorbed by cement phases. Such nonionic surfactants with a low tendency to absorb on cement phases are particularly preferred in certain applications. However, it is also possible to use cationic, anionic or zwitterionic surfactants.

Suitable surfactants in the context of the present invention include lipids such as cholates, glycocholates, fatty acid salts, glycerides, glycolipids and phospholipids. These may be derived from natural sources or may be synthetically produced. Non-ionic lipids are preferred in certain embodiments.

Suitable anionic surfactants include, in particular, organosulfates, alkyl ether carboxylates, alkyl sulfates, alkyl ether sulfates, alkyl sulfosuccinates, alkyl phosphates, alkyl ether phosphonates and alkyl benzene sulfonates.

Suitable nonionic surfactants are, in particular, fatty acid alkoxylates, alkoxylated alcohols, especially fatty acid alcohol alkoxylates and alkoxylates of glycerol and pentaerythritol, alkylphenol alkoxylates, alkoxylated polysaccharides, alkoxylated polycondensates, fatty acid amide alkoxylates, esters of fatty acids, especially fatty acid esters of methanol, sorbitan, glycerol or pentaerythritol, alkoxylated alkylamines with an alkyl radical consisting of 6-20 carbon atoms, alkyl glycosides, alkyl glucamides, esters of fatty acids and sugars, as well as alkoxylated sorbitans, copolymers of ethylene oxide and propylene oxide, lauryl ether sulphonates, naphthalene sulphonates, hydrophobized starch, hydrophobized cellulose or siloxane-based surfactants. Preferred alkoxylates in this context are particularly ethoxylates.

Suitable cationic surfactants contain in particular ammonium groups or quaternary nitrogen atoms and also have at least one long-chain alkyl radical. Examples of cationic surfactants are quaternary ammonium compounds with at least one alkyl group, imidazolines and amine N-oxides. For example a cationic surfactant is chosen from tetradecyltrimethylammonium bromide (TTAB),
Cetyltrimethylammonium bromide (CTAB), Dodecyltrimethylammonium bromide (DTAB)

In another embodiment the surfactant comprises or consist of a Gemini surfactant. Gemini surfactants contain two hydrophilic head groups and two hydrophobic tails separated by a spacer at or near the head groups. When both hydrophobic tails are the same and the hydrophilic groups are identical, Gemini surfactants are said to have a symmetrical structure. The substituents in gemini surfactants are largely responsible for the behavior of these compounds in solution and their potential applications. In particular, gemini surfactants may contain quaternary nitrogen atoms, which are usually present in acyclic forms. However, there are also gemini surfactants that contain nitrogen in saturated and unsaturated rings. The spacer can be either rigid or flexible, tending to be hydrophobic or hydrophilic. The special properties of Gemini surfactants can be influenced by optimizing the hydrohiliclipophilic balance (HLB value). This can be done, for example, by introducing balanced polar or hydrophobic groups in both head groups, tails or spacers.

Examples of Gemini surfactants are structures of the following formulae. 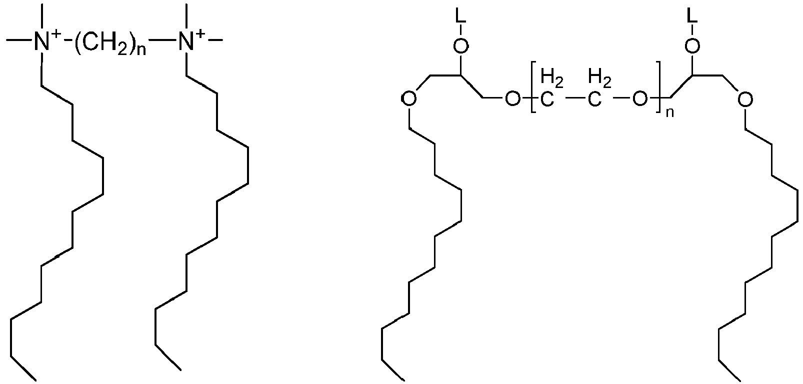 where L is a hydrogen atom or a sulfonic acid group.

Examples of preferred gemini surfactants are presently in particular alkoxylated acetyldiols or gemini surfactants as described in EP 0 884 298.

Especially, the surfactant comprises an anionic surfactant and/or a non-ionic surfactant, most preferably a mixture of an anionic surfactant and/or a non-ionic surfactant.

Especially, the surfactant is an amphoteric surfactant. More preferably, the surfactant is selected from betaines, especially fatty acid amido alkyl betaines, in particular cocamidopropyl betaine. Betaines are neutral chemical compound with a positively charged cationic functional group, such as e.g. quaternary ammonium or phosphonium cation, that bears no hydrogen atom, and with a negatively charged functional group such as a carboxylate group that may not be adjacent to the cationic site. Thus a betaine is a specific type of a zwitterion.

These kind of surfactants turned out to be highly beneficial in the present context since they are highly compatible with typically present further components of foamed mineral binder compositions and allow for producing highly stable foams.

A concentration of the surfactant preferably is from 0.001 - 10 wt.%, especially 1 - 4 wt.%, in particular 2-3 wt.%, with respect to the weight of the water of the aqueous foam.

Especially, the surfactant is mixed with the water of the aqueous foam before foaming.

In the present context, the expression "mineral binder" in particular stands for substances that harden because of chemical reactions with water producing hydrates. Preferably, the hydrates produced are not water-soluble. In particular, the hydration chemical reactions of the mineral binder takes essentially place independently of the water content. This means that the mineral binder can harden and retain its strength even when exposed to water, e.g. underwater or under high humid conditions.

Preferably, the mineral binder comprises or consists of Portland cement, aluminate cement, sulphoaluminate cement, latent hydraulic and/or pozzolanic binder materials, calcium sulfate hemihydrate, anhydrite and/or hydrated lime.

Preferred Portland cement is according to norm EN 197, in particular of type CEM I. The term "alumina cement" stands in particular for a cement with an aluminum content, measured as Al₂O₃, of at least 30 wt.%, especially at least 35 wt.%, in particular 35 - 58 wt.%. Preferably, the alumina cement is alumina cement according to standard EN 14647. Preferably, the sulphoaluminate cement is calcium sulphoaluminate cement.

The term "latent hydraulic and/or pozzolanic binder materials" stands in particular for type II concrete additives with latent hydraulic and/or pozzolanic character according to EN 206-1. In particular, the latent hydraulic or pozzolanic binder material comprises or consists of slag, fly ash, silica fume, metakaolin and/or natural pozzolanes. Thereby, slag and/or fly ash, in particular furnace slag is especially preferred.

Calcium sulfate hemihydrate or CaSO₄ · ½ H₂O may be present as α-hemi-hydrate or β-hemi-hydrate. Anhydrite is in particular anhydrite II and/or anhydrite III, whereas hydrated lime stands for calcium hydroxide.

According to a further preferred embodiment, the aqueous slurry comprises a dispersed polymer, especially a water redispersible polymer, selected from homopolymers or copolymers based on one or more monomers selected from the group consisting of vinyl acetate, vinyl alcohol, acrylic acid, acrylate, methacrylic acid, methacrylate, styrene, butadiene, vinyl neodecanoate (VeoVa), vinyl ester and ethylene.

In another preferred embodiment, the dispersed polymer is a polyurethane polymer. The term "polyurethane polymer" includes all polymers prepared by the so-called diisocyanate polyaddition process. Besides urethane groups they can also contain other groups, particularly urea groups. In particular, the polyurethane polymer is are based on at least one polyisocyanate monomer and at least one polyol and/or polyamine monomer.

Suitable polyisocyanate monomers are compounds having two or more hydroxyl- and/or amine-reactive isocyanate groups. These comprise not only aromatic but also aliphatic isocyanates. Suitable polyisocyanates include 2,4-diisocyanatotoluene, 2,6-diisocyanatotoluene, methylenedi(phenyl isocyanate), polymeric methylenedi(phenyl isocyanate), bis(4-isocyanatocyclohexyl)methane, I ,3-bis(lisocyanato-1-methylethyl)benzene (m-TMXDI), I -isocyanato-5-isocyanatomethy 1-3 ,3 ,5-trimethylcyclohexane, naphthylene diisocyanate, hexamethylene diisocyanate, 1,6-diisocyanatohexane, isophorone diisocyanate, diisocyanatodicyclohexylmethane and biuret triisocyanate.

Suitable polyol monomers are compounds having two or more isocyanate-reactive hydroxyl groups. Polyol monomers according to the invention also comprise polyether polyols and polyester polyols. Examples of polyol monomers are 1,2-ethanediol/ethylene glycol, 1,2-propanediol/1,2-propylene glycol, 1,3-propanediol/1,3-propylene glycol, 1,4-butanediol/1,4-butylene glycol, 1,6-hexanediol/1,6-hexamethylene glycol, 2-methyl-1,3-propanediol, 2,2-dimethyl-1,3-propanediol/neopentyl glycol, 1,4-bis(hydroxymethyl)cyclohexan/ cyclohexanedimethanol, 1,2,3-propanetriol/ glycerol, 2-hydroxymethyl-2-methyl-1,3-propanol/trimethy 1 olethane, 2-ethy 1-2-hydroxymethy 1-1,3-propanediol/trimethy lolpropane, 2,2-bis(hydroxymethyl)-1,3-propanediol and pentaerythritol.

Suitable polyamine monomers are compounds having two or more isocyanate-reactive amine groups. Examples of employable polyamine monomers are diethyltolylenediamine, methylbis(methylthio)phenylenediamine, adipic dihydrazide, ethylenediamine, diethylenetriamine, triethylenetetramine, tetraethylenepentamine, pentaethylenehexamine, dipropylenetriamine, hexamethylenediamine, hydrazine, isophoronediamine, N-(2-aminoethyl)-2-aminoethanol, polyoxyalkyleneamine, adducts of salts of 2-acrylamido-2-methylpropane-1-sulfonic acid (AMPS) and ethylenediamine, adducts of salts of (meth)acrylic acid and ethylendiamine, adducts of 1,3-propanesulfone and ethylenediamine or any desired combination of these polyamines.

Further suitable polyurethanes and the production thereof are described in the patent application DE 103 15 175 A.

Especially, the dispersed polymer is selected from polyacrylates, polyvinyl esters, polyvinyl alcohols, ethylene-vinyl acetate copolymers, ethylene-vinyl alcohol copolymers, styrene-butadiene copolymers, vinyl acetate-vinyl neodecanoate (VeoVa) copolymers, polyurethane polymers or mixtures thereof.

According to a highly preferred embodiment, the dispersed polymer is a copolymer comprising vinyl acetate and ethylene monomers and/or the dispersed polymer is a terpolymer comprising vinyl acetate, ethylene and vinyl ester monomers. Especially preferred are ethylene-vinyl acetate copolymers, especially with a low proportion of vinyl acetate monomers, e.g. below 25 mol.%, in particular below 10 mol.%, with respect to the overall monomer content of the copolymer.

The dispersed polymer preferably is employed either as a powder or as a polymer dispersion. The term "polymer dispersion" refers to polymer material dispersed in water. That means the polymer material is not water soluble but forms a stable dispersion in water. Preferably a polymer dispersion has a solids content in the range of 1 to 65 weight-%, more preferably 10 to 60 weight-%.

Proportions of the dispersed polymer always relate to the solids content of the polymer.

Preferably, a proportion of the dispersed polymer is from 1 -25 wt.%, especially 5 - 15 wt.%, especially preferred from 8 - 12 wt.%, with respect to the weight of the mineral binder in the aqueous slurry.

Dispersed polymers with these proportions help to stabilize the foam structure of the foamed mineral binder composition. Furthermore water redispersible polymers do not add additional water to the compositions and further improve the mechanical properties of the foamed mineral binder composition.

Preferably, the dispersed polymer, especially the water redispersible polymer, is used in the form of a powder.

In another implementation the aqueous slurry comprises a plasticizer, whereby the plasticizer is in particular selected from the group of lignosulfonates, gluconates, naphtalenesulfonates, melamine sulfonates, vinyl copolymers and/or polycarboxylate ethers. Polycarboxylate ethers are preferred. In particular, the plasticizer is chemically different from the above-mentioned water redispersible polymer.

A proportion of the plasticizer, especially of the polycarboxylate ether, is preferably from 0.001 - 5 wt.%, in particular 0.01 - 1 wt.%, with respect to the weight of the mineral binder in the aqueous slurry.

According to another preferred embodiment, the aqueous slurry comprises fillers. With fillers, the properties of the foamed mineral binder composition can further be adapted to specific needs.

In the present context, the term "filler" is to be interpreted in a broad sense. Thus, the filler encompasses particulate materials with submicron-sized particles, micrometer-sized particles, millimeter-sized particles up to centimeter-sized particles. The filler is chemically and/or physically different from the other constituents of the foamed composition.

The filler can be an inert material and/or a reactive material. An inert material is meant to be a material which does not react chemically with the other components of the composition under storage, processing and application conditions. In terms of chemical composition, the filler can be an inorganic, organic, or inorganic-organic-hybrid material. In particular, the filler is a particulate material.

For example, the filler comprise sand, limestone, artificial stone, quartz, fly ash, micro silica, metakaolin, silica fume, fumed silica, granulated blast-furnace slag, foamed blast furnace slag, volcanic slag, expanded clay, expanded shale, expanded slate, foamed glass, perlite, pumice, pozzolans, diatoms, vermiculite, norlite, ceramic particles, ceramic spheres, and/or porous silica.

Especially a maximum particle size of the filler is 10 mm, especially 5 mm, in particular 2 mm or 1 mm.

Preferably, a proportion of the filler is from 0.001 - 25 wt.%, especially 0.001 - 10 wt.%, preferably 0.001 - 5 wt.%, with respect to the mineral binder in the aqueous slurry.

According to an embodiment of the invention, other additives may be added to the aqueous foam, the aqueous slurry and/or the foamed mineral binder composition.

Such additives may be thickening agents, viscosifying agents, accelerators, setting retarders, coloured pigments, hollow glass beads, film forming agents, hydrophobic agents or de-polluting agents (for example zeolites or titanium dioxide), latex, organic or mineral fibres, mineral additions or their mixtures. Preferably, the additives do not comprise any defoaming agents.

The expression "thickening agent", is generally to be understood as any compound making it possible to maintain the heterogeneous physical phases in equilibrium or facilitate this equilibrium. The suitable thickening agents are preferably gums, cellulose or its derivatives, for example cellulose ethers or carboxy methyl mellulose, starch or its derivatives, gelatine, agar, carrageenans and/or bentonite clays.

Accelerators for hydraulic binders are well known, and any solidification and hardening accelerators may be used for the present invention. For example, the accelerator is selected from aluminum hydroxide, aluminum sulphate, carboxylic acids, metal oxides, metal hydroxides, inorganic acids, alkali hydroxide, alkali metal silicates nitrates, and/or nitrites. Particularly advantageous are aluminum-containing accelerators, e.g. aluminium sulphate.

Preferably, the accelerator, especially an aluminium compound, is added in an amount of 0.15 - 5 wt.%, preferably 0.25 - 3 wt.%, especially 0.5 - 2.5 wt.%, with respect to the weight of the mineral binder.

Preferably, the inventive method is conducted in the absence of a chemically acting pore-forming agent and/or a chemically acting foaming agent, in particular a pore-forming agent selected from metals, especially Al and/or H₂O₂. As defined above, in absence of a chemically acting pore-forming agent and/or a chemically acting foaming agent in particular means that the a proportion the pore-forming agent and/or the foaming agent is lower than 0.1 wt.%, in particular lower than 0.01 wt.%, especially lower than 0.001 wt.%, with respect to the water of the aqueous foam. Most preferably, there are no chemically acting pore-forming agent and/or chemically acting foaming agent present.

Although chemically acting pore-forming agents can be used in the inventive method, it is preferred not to use them for decoupling the foaming process from environmental conditions during foaming and the specific chemical composition of the foamed mineral binder composition more. Furthermore, hazardous chemical reactions of chemically acting pore-forming agent can be avoided.

In step b) the aqueous foam and the slurry of the mineral binder are mixed together, especially under overpressure conditions. Preferably, at an overpressure of 1 - 15 bar, especially 2-5 bar, with respect to the environmental air pressure. This allows for easily adjusting the density of the foamed mineral binder compositions in wide ranges.

Most preferably, mixing is effected in a static mixer, whereby, preferably, the aqueous foam and the slurry of the mineral binder are driven by pressurized air through the static mixer. Preferably, the pressurized air has a pressure of 1 - 15 bar, especially 6-10 bar, above the environmental air pressure. Thereby, stable foamed mineral binder compositions are obtainable in a reliable manner.

In step (b) the aqueous foam may be mixed with the slurry of the mineral binder either batch-wise or continuously.

Especially, a ratio of water to cement (w/c) of the aqueous slurry is from 0.25 - 0.5, especially 0.3 - 0.4.

A density of the foamed mineral binder composition directly after preparation preferably is < 500 g per liter, especially < 300 g per liter, in particular < 200 g per liter. For example the density is from 20 - 500 g per liter, 50 - 300 g per liter or 70 - 200 g per liter. However, other densities can be obtained if required.

Thus, preferably, in step b) the aqueous foam and the aqueous slurry are mixed in proportions and/or under such conditions to achieve these densities.

In particular, a density of the foamed mineral binder composition after hardening for 16 hours is < 500 g per liter, especially < 300 g per liter, in particular < 200 g per liter. For example the density is from 20 - 500 g per liter, 50 - 300 g per liter or 70-200 g per liter.

However, other densities for the freshly prepared and/or the hardened foamed mineral binder composition can be realized if required.

Preferably, a ratio of the volume of the foamed mineral binder composition after hardening for 16 hours to the volume of the foamed mineral binder composition directly after preparation is from 0 - 40%, in particular 0 - 20%. In this case, the density of the foamed mineral binder composition only marginally changes, which is indicative for a highly stable foam structure.

Preferably, a thermal conductivity of the foamed mineral binder composition after hardening for 28 days is lower than 150 mW/(m·K), especially lower than 65 mW/(m·K), in particular lower than 50 mW/(m·K), measured according to ASTM C518-17. In particular the thermal conductivity is from 25 -150 mW/(m·K), especially 25 - 65 mW/(m·K), in particular 25 - 50 mW/(m·K). Foamed mineral binder composition with such thermal conductivities are highly suitable for insulating applications.

A further aspect of the present invention is directed to a foamed mineral binder composition obtainable or obtained by a method as described above.

Another aspect of the invention is concerned with the use of an aqueous foam comprising dissolved carbon dioxide and/or carbonate for producing a foamed mineral binder composition, especially by mixing the aqueous foam with a slurry of a mineral binder.

In these further aspects, preferably, the preferred implementations and features described above in connection with the inventive method are realized as well.

Further advantageous configurations of the invention are evident from the exemplary embodiments.

### Brief description of the drawing

The drawing used to explain the embodiments shows:

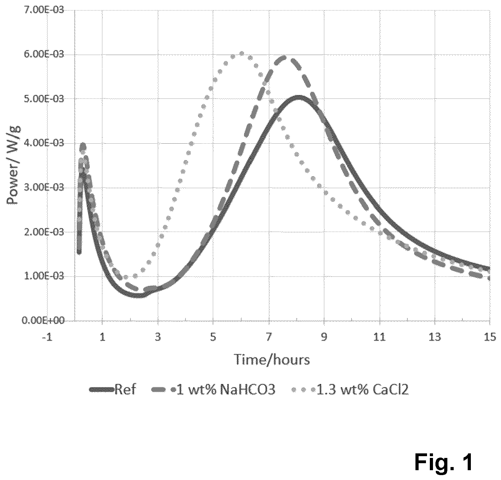

- Fig. 1: calorimetric data recorded during the hardening process of differently produced foamed cement compositions.

### Exemplary embodiments

### 1. General method

For producing foamed mineral binder compositions, a device of type "Foamed Concrete Laboratory Mixer - SBL" from GERTEC Maschinen- und Anlagenbau GmbH (Germany) was used.

Thereby, an aqueous foam with a predetermined density was produced in a first container, and a cement slurry was produced in a second container. Subsequently, the aqueous foam and the cement slurry were driven by pressurized air through a static mixing unit of the device in order to obtain a foamed mineral binder composition, i.e. a foamed cement composition. Thereby, the target foam density of the foamed cement composition was adjusted by the air pressure.

### 2. Cement foams produced with dissolved carbon dioxide

### 2.1 Preparation

Aqueous foams have been produced with the above described Gertec device by foaming 10 kg of a saturated solution of CO₂ in water (approximately 1.7 g CO₂ per liter) and 0.2 kg of an organic tenside (Sika^{®} Lightcrete-400; available from Sika Deutschland GmbH). The foam density in the range of 100 - 150 g/liter has been adjusted by appropriate machine settings. Specific foam densities are given in tables shown below. These aqueous foams are referred to as carbonized foams **CF.**

For comparative experiments, corresponding foams with pure water instead of a saturated solution of CO₂ in water were produced as well. These aqueous foams are referred to as water based foams **WF.**

Aqueous cement slurries have been produced by mixing 25 kg of Portland cement (CEM I, 52.5 N; from Lafarge Holcim) with 0.05 kg of a polycarboxylate ether plasticizer, water (w/c = 0.4) and a redispersible polymer (RDP) based on a hard copolymer of vinyl acetate and ethylene. Specific amounts of the RDP are given in tables shown below.

Subsequently, the aqueous foams and the cem2 - 5 bar above environmental air pressure) through the static mixing unit of the device in order to obtain the foamed cement composition.

### 2.2 Properties

In a first series of experiments **A.1 - A.7,** for reasons of comparison, the effect of the redispersible polymer was evaluated with water based foams **WF.** Foam stability has been judged optically by eye. **R1** is a control experiment without any RDP. Table 1 gives an overview of the results:

**Table 1: Effect of the redispersible polymer (RDP)**

| **Exp.** | **aqueous foam type** | **Density [g/liter]** | **RDP [kg]** | **Appearance of foamed cement** |
|---|---|---|---|---|
| **R1** | **WF** | 135 | 0 | collapsed |
| **A.1** | **WF** | 135 | 0.5 | collapsed |
| **A.2** | **WF** | 135 | 0.75 | collapsed |
| **A.3** | **WF** | 135 | 1.25 | partially collapsed |
| **A.4** | **WF** | 135 | 2.5 | stable |
| **A.5** | **WF** | 80 | 2.5 | collapsed |
| **A.6** | **WF** | 135 | 3.75 | (unstable process) |

It was observed that a stable foam could only be obtained with 2.5 kg RDP per 25 kg cement (10%) (cf. **A.4).** However, when switching to a lower target density (100 g/liter; **A.5),** the foam collapsed. Increasing the RDP content further led to an unstable process, very likely due to viscosity increase **(A.6),** where no continuous foam could be produced.

In a second series of experiments **B.1** - **B.2,** the effect of carbon dioxide or CO₂, respectively, was evaluated. Thereby, no RDP was used in the cement slurries. The results are shown in table 2.

**R2** is a control experiment in which a water based foam **WF** (not carbonized) was produced and the aqueous foam/cement slurry mix was driven through the static mixing unit by pressurized CO₂ instead of air. This results in a very high CO₂ loading in the foamed cement composition.

**Table 2: Effect of carbon dioxide**

| **Exp**. | **aqueous foam type** | **Density [g/liter]** | **RDP [kg]** | **Appearance of foamed cement /density [g/liter]** |
|---|---|---|---|---|
| **R2** | **WF** | 80 | 0 | collapsed / 1'800 |
| **B.1** | **CF** | 80 | 0 | partially stable / 149 |
| **B.2** | **CF** | 100 | 0 | partially stable / 152 |

With experiment **R2,** a full carbonation of the cement has to be expected, however, this approach results in complete foam collapse already inside the foam generator. Although it is known that carbonation by slow diffusion increases the strength and decreases the density, we speculate that using a high CO₂ loading in the foaming process leads to a fast carbonation reaction which destroys the foam structure. Surprisingly, introducing carbon dioxide through the aqueous foams based on the carbonized water is a convenient way for producing stable low density foams (cf. **B.1** and **B.2**).

The negative effect of high CO₂ loading during foaming of the mix has also been confirmed by a trial with only the aqueous foam (without mixing in the cement slurry). In this case, the foam stability has been judged by the foam height reduction of foam samples in beakers, observed over 60 min.

Using carbonated water with 2 wt.% tenside resulted in a foam height reduction of 5% (17 cm initial foam height →16 cm foam height after 60 min), while a variant using pure water with 2 wt.% tenside and pressurized CO₂ instead of air for foam generation, resulted in a foam height reduction of 65% (17 cm initial foam height → 6 cm foam height after 20 min, followed by a full collapse after 30 min). This shows that already the foam generation is compromised with high CO₂ loadings, which might be due to a de-foaming in combination with the tenside.

In a third series of experiments, the combined effect of carbon dioxide in the aqueous foam and the RDP in the cement slurry was evaluated. **R3** is a control experiment without carbon dioxide in the aqueous foam. Table 3 gives an overview about the results.

**Table 3: Combined effect of carbon dioxide and RDP**

| **Exp.** | **aqueous foam type** | **Density [g/liter]** | **RDP [kg]** | **Density of foamed cement [g/liter]** | **λ[mW/m·K]** |
|---|---|---|---|---|---|
| **R3** | **WF** | 80 | 2.5 | 184 (collapsed) | 60 |
| **C.1** | **CF** | 80 | 2.5 | 88 (stable) | 42 |

Evidently, experiment **C.1** shows a strong improvement of the foam stability and the density obtainable over the control experiment **R3** without carbon dioxide in the aqueous foam. Especially, the very low density gives rise to a low thermal conductivity λ well below 50 mW/m·K.

### 3. Cement foams produced with carbonate salts

### 3.1 Preparation

Aqueous foams were produced as described above in chapter 2. However, instead of carbon dioxide, carbonate salts were added. The foam density in the range of 160 - 150 g/liter has been adjusted by appropriate machine settings. Specific salts and theirs proportions as well as foam densities are given in the tables shown below.

Aqueous slurries were produced as described above in chapter 2. Thereby, no RDP was added.

### 3.2 Properties

Several foamed cement compositions were prepared as shown in table 4. **D.1** and **D.3** are control experiments with CaCl₂ instead of a carbonate salt.

**Table 4: Effect of carbonate salts**

| **Exp.** | **Carbonate salt** | **Proportion of carbonate salt with respect to dry cement [wt.%]** | **Density of foamed cement after preparation [g/liter]** | **Density of foamed cement after 16 h [g/liter]** |
|---|---|---|---|---|
| **D.1** | CaCl₂ | 1.3 | 160 | 406 |
| **D.2** | NaHCO₃ | 1.0 | 150 | 122 |
| **D.3** | CaCl₂ | 1.3 | 290 | 453 |
| **D.4** | NaHCO₃ | 1.0 | 300 | 317 |

Foamed cement compositions prepared with NaHCO₃ did not collapse for fresh densities of 150 g/liter **(D.2)** and only slightly for fresh densities of 300 g/liter **(D.4).** In contrast, with non-carbonate salts (CaCl₂), the foamed cement compositions significantly collapsed as evident from the strong increase of the density over 16 h **(D.1** and **D.3).**

Furthermore, calorimetric data have been recorded during the hardening process of experiments **D.2** and **D.3** with a device of type Calmetrix I-CAL 8000 HPC (available from Calmetrix Inc., USA). Fig. 1 shows the respective data. Evidently, the experiment with CaCl₂ **(D.3)** shows a strong accelerating effect, whereas with NaHCO₃ there is hardly any acceleration when compared with a reference without any additional salt (Ref).

Additionally, the flow table spreads (determined similar to DIN EN DIN EN 12350-5) were determined for different foamed cement compositions. Details and results are shown in table 5. **D.5** is an example in which CO₂ was used instead of a carbonate salt whereas **D.6, D.7** and **D.8** are examples with other salts.

**Table 5: flow table spread of foamed cement compositions**

| **Exp.** | **Salt** | **Proportion of salt [wt.%]** | **Flow table spread of foamed cement compositions directly after preparation [cm]** |
|---|---|---|---|
| **D.1** | CaCl₂ | 1.3 | > 35 |
| **D.2** | NaHCO₃ | 1.0 | < 12 |
| **D.5** | CO₂ | 1.6 g/liter | < 12 |
| **D.6** | K₂CO₃ | 1.0 | < 12 |
| **D.7** | Na₂CO₃ | 1.0 | < 12 |
| **D.8** | CaCO₃ | 1.0 | > 35 |

Thus, the rather small flow table spreads observed for the experiments with the water soluble carbonate based salts/CO₂ (D.2, D.3, D.5, D.6, D.7) are indicative of a fast thickening of the foamed cements. In contrasts, the accelerating salts CaCl₂ and CaCO₃ (hardly water soluble) show much higher flow table spreads. It can therefore be concluded that it is not the accelerating effect of carbonate salt that leads to the improved foam stability. Rather it seems to be the thickening effect.

It will be appreciated by those skilled in the art that the present invention can be embodied in other specific forms without departing from the spirit or essential characteristics thereof. The presently disclosed implementations and embodiments are therefore considered in all respects to be illustrative and not restricted.

## Claims

1. Method for producing a foamed mineral binder composition, comprising the steps of:
a) Separately providing:
(i) an aqueous foam;
(ii) an aqueous slurry comprising a mineral binder and a dispersed polymer;
b) Mixing the slurry of the mineral binder with the aqueous foam to obtain the foamed mineral binder composition;
whereby during the production of the foamed mineral binder composition, carbon dioxide and/or a carbonate is provided such that it is incorporated in the foamed mineral binder composition.

2. Method according to any claim 1, whereby in step a) (i) an aqueous foam comprising dissolved carbon dioxide and/or carbonate is provided.

3. Method according to any of preceding claims, whereby the aqueous foam is produced by dissolving a substance selected from carbon dioxide, a source of carbon dioxide, carbonate and/or a source of carbonate in water to obtain an aqueous mixture, and subsequently foaming the so obtained aqueous mixture with a gas, especially with air.

4. Method according any of preceding claims, whereby the aqueous foam comprises carbon dioxide with a concentration of 150 - 7'000 mg, especially 500 - 3'500 mg, in particular 1'000 - 2'500 mg, per liter of liquid water in the aqueous foam.

5. Method according any of preceding claims, whereby the aqueous foam is produced by adding a carbonate, whereby a weight proportion of carbonate ions (CO₃²⁻) comprised in the substance is from 0.01 - 3 wt.%, especially 0.1 - 1 wt.%, with respect to the mineral binder, especially, the substance is sodium hydrogen carbonate and the proportion is 0.01 - 3 wt.%, especially 0.1 - 1 wt.%, with respect to the mineral binder.

6. Method according any of preceding claims, whereby the aqueous foam comprises a surfactant, especially an anionic surfactant and/or a non-ionic surfactant, most preferably a mixture of an anionic surfactant and/or a non-ionic surfactant.

7. Method according any of preceding claims, whereby the surfactant is mixed with the water of the aqueous foam before foaming.

8. Method according any of preceding claims, whereby the mineral binder in the aqueous slurry comprises a hydraulic binder, especially Portland cement, aluminate cement, sulphoaluminate cement, latent hydraulic and/or pozzolanic binder materials, calcium sulfate hemihydrate, anhydrite and/or hydrated lime.

9. Method according any of preceding claims, whereby the dispersed polymer is selected from polyacrylates, polyvinyl esters, polyvinyl alcohols, ethylene-vinyl acetate copolymers, ethylene-vinyl alcohol copolymers, styrene-butadiene copolymers, vinyl acetate-vinyl neodecanoate (VeoVa) copolymers, polyurethane polymers or mixtures thereof.

10. Method according any of preceding claims, whereby a proportion of the water dispersed polymer is from 1 -25 wt.%, especially 5 - 15 wt.% or 8 - 12 wt.%, with respect to the weight of the mineral binder in the aqueous slurry.

11. Method according any of preceding claims, whereby the aqueous slurry comprises a plasticizer, especially a polycarboxylate ether.

12. Method according any of preceding claims, whereby in step b) the aqueous foam and the slurry of the mineral binder are mixed together in a static mixer, whereby, preferably, the aqueous foam and the slurry of the mineral binder are driven by pressurized air through the static mixer.

13. Method according any of preceding claims, whereby a density of the foamed mineral binder composition directly after preparation is < 500 g per liter, especially < 300 g per liter, in particular < 200 g per liter and/or a density of the foamed mineral binder composition after hardening for 16 hours is < 500 g per liter, especially < 300 g per liter, in particular < 200 g per liter.

14. Foamed mineral binder composition obtainable or obtained by a method according any of preceding claims.

15. Use of an aqueous foam comprising dissolved carbon dioxide and/or carbonate for producing a foamed mineral binder composition, especially by mixing the aqueous foam with a slurry of a mineral binder.
